# FASCICULE DE BREVET EUROPEEN

(11) **EP 1 991 053 B1**
(45) Date de publication et mention de la délivrance du brevet: **02.03.2016**
(21) Numéro de dépôt: 06726048.9
(22) Date de dépôt: 08.03.2006
(51) Int. Cl.: A01N 25/34, A01N 25/26, A01N 25/10, A01N 25/08

(54) **AGENT DE TRAITEMENT AGRONOMIQUE, À EFFET RETARDÉ, EN PARTICULIER POUR LA GERMINATION DES SEMENCES ET LE DÉVELOPPEMENT DES PLANTES**
AGROCHEMISCHES MITTEL MIT VERZÖGERTER FREISETZUNG, INSBESONDERE ZUR KEIMUNG VON SAATGUT UND ENTWICKLUNG DER PFLANZEN
DELAYED-EFFECT AGRONOMIC TREATMENT AGENT, IN PARTICULAR FOR SEED GERMINATION AND PLANT DEVELOPMENT

(43) Date de publication de la demande: 19.11.2008
(73) Titulaire: HM.CLAUSE, 26800 Portes-les-Valence (FR)
(72) Inventeur: GAUDILLAT, Michel, F-78530 Buc (FR)
(74) Mandataire: Chevalier, Renaud Philippe
(86) Numéro de dépôt international: PCT/FR2006/000517
(87) Numéro de publication internationale: WO 2007/101917

(56) Documents cités:
- EP-A- 0 018 119
- WO-A-00/48465
- WO-A-83/00799
- WO-A-91/01803
- WO-A-99/63817
- WO-A-02/057862
- WO-A-03/061383
- WO-A-2004/034791
- US-A- 5 221 535

## Description

La présente invention concerne de manière générale le traitement agronomique des plantes, à différentes fins, qu'il s'agisse de stimuler la germination des semences, de favoriser la croissance des plantes, ou encore de les protéger contre différents agents pathogènes ou parasites.

L'invention s'intéresse plus spécifiquement au traitement agronomique non aérien, c'est-à-dire à partir d'un substrat humide, par exemple à partir d'un sol, dans lequel la plante d'intérêt vit ou est mise en culture. A titre d'exemple, la présente invention sera explicitée et décrite par référence au traitement des semences, par exemple d'espèces, notamment variétés potagères, florales.et de grande culture, ou encore de semences d'arbres et d'arbustes.

Aux fins de traiter des plantes, en particulier des semences, à partir par exemple d'un sol nourricier humide, il est connu d'obtenir, produire et de disposer de l'agent de traitement à l'état solide et divisé, c'est-à-dire comprenant des particules solides comportant la ou les entités actives pour le traitement, qu'il s'agisse par exemple d'un nutriment de la plante, de micro-organismes améliorants, ou de produits de désinfection de l'environnement des semences et des plantes,

Deux modes principaux de réalisation d'un tel agent de traitement sont en pratique proposés ou décrits.

Selon un premier mode, chaque particule comprend un grain constitué par un matériau solide minéral ou synthétique, adsorbant et/ou absorbant l'entité active ; cf par exemple bactéries sur un substrat de tourbe.

Ce mode ne permet pas, d'une part de contrôler la libération de l'entité active dans le substrat humide, et d'autre part de protéger ladite entité le plus longtemps possible vis-à-vis de l'humidité existant ou apportée dans ledit substrat, par exemple lors de toute hydratation temporaire préalable à la phase d'action de l'entité active.

Selon un second mode, chaque particule consiste en une capsule, micro ou nano-capsule, comportant une membrane, par exemple obtenue avec un polymère d'origine naturelle, encapsulant la ou les entités actives ; cf. par exemple huiles essentielles micro-encapsulées.

Ce mode ne présente pas une résistance mécanique suffisante permettant aux capsules de supporter, soit un traitement postérieur générateur d'attrition, par exemple lors d'un enrobage ou pelliculage en phase humide, soit une dépose directe dans le substrat, par exemple en mélange avec les semences, dans un semoir.

Aux fins d'obtenir un agent de traitement agronomique, à l'état solide et divisé, adapté directement ou indirectement à une incorporation au contact de et dans un substrat, par exemple un sol, par nature humide ou susceptible d'être hydraté, la présente invention a pour objet un système de conditionnement ou mise en forme de l'entité active de traitement agronomique, permettant tout à la fois, d'une part une bonne résistance mécanique, en particulier à l'écrasement ou à la pression, ainsi qu'une bonne résistance à une hydration temporaire lors de la préparation du produit final à mettre en oeuvre, et d'autre part un relarguage contrôlé ou contrôlable dans le temps de l'entité active, précisément au moyen de l'humidité ou eau disponible ou apportée dans le substrat.

Selon la présente invention, chaque particule comprend :
- un noyau constitué par un grain d'un matériau solide inerte, c'est-à-dire vis-à-vis du substrat, comportant une surface développée interne supérieure à sa surface apparente, en particulier poreux (inter et/ou intra-porosité), et adapté de ce fait pour une adsorption et/ou absorption de l'entité active seule, ou supportée par une phase liquide par exemple,
- l'entité active de traitement agronomique, telle que définie précédemment, absorbée dans le grain et/ou adsorbée à la surface du grain ou de ses particules constitutives.
- une première membrane encapsulant le noyau comprenant l'entité active, elle-même adsorbée et/ou absorbée dans ledit noyau comme dit précédemment, cette membrane étant constituée par au moins un polymère hydrophile, perméable vers l'extérieur vis-à-vis de l'entité active, lorsqu'elle est en contact direct ou indirect avec le substrat humide,
- une seconde membrane,ladite seconde membrane étant constituée par au moins un polymère hydrophobe au contact du substrat et ladite seconde membrane revêtissant la première membrane.

Deux modes d'exécution doivent être ensuite considérés.

Selon un premier mode d'exécution de l'invention, l'agent de traitement précédemment défini est utilisé directement dans le substrat et par exemple disposé dans un sol, conjointement et en mélange avec des semences.

Selon ce premier mode d'exécution, le système précédemment défini permet, par un choix approprié du ou des polymères hydrophiles constitutifs de la première membrane, plus ou moins solubles et/ou hydratables en phase aqueuse, et de leur épaisseur, de moduler la perméabilité vers l'extérieur de la membrane vis-à-vis de l'entité active, en particulier sous l'effet de l'humidité, et au total de libérer l'entité active, localement (in situ) dans le substrat, selon toute planification temporelle appropriée, par exemple immédiatement, ou en quelques jours, ou en quelques semaines.

Si on souhaite apporter à la plante différentes entités actives, incompatibles entre elles, ou se neutralisant les unes les autres, le système selon la présente invention permet d'obtenir des agents de traitement respectivement différents, avec des relarguarges respectivement décalés dans le temps, mais néanmoins apportés conjointement dans le sol, par exemple dans la zone racinaire de la plante.

Le système de conditionnement ou mise en forme selon la présente invention constitue une alternative effective et efficace à l'application extemporanée de l'entité active pour le traitement agronomique.

Ce système permet en particulier d'éviter toute perte de l'entité active, déjà pendant le stockage de l'agent de traitement, par oxydation, évaporation, etc..., mais aussi lors de l'application, par réhumidification temporaire, etc...

Le système de conditionnement selon l'invention permet aussi d'obtenir un agent de traitement, à l'état solide et divisé, et en condition sèche, compatible avec les techniques actuelles de dépose dans un sol, sur des plantes ou sur des semences, par exemple en termes de grosseur des particules, de fluence, mouillabilité, et solidité.

Chaque particule de l'agent de traitement précédemment défini comprend en outre une seconde membrane, encapsulant le noyau comprenant l'entité active, lui-même déjà encapsulé par la membrane précédemment définie, c'est-à-dire constituée par au moins un polymère hydrophile, cette dite seconde membrane étant constituée par au moins un polymère hydrophobe, délitable au contact du substrat humide.

Grâce à la seconde membrane, il est possible de protéger l'agent de traitement contre toute hydratation temporaire, qui autrement serait susceptible de provoquer la libération ou le relarguage de l'entité active. Cette protection est en particulier importante lorsque l'agent de traitement est enrobé ou pelliculé, par exemple autour de semences, avec un matériau délitable, du type colle, apporté en phase humide, puis séché.

L'agent de traitement selon l'invention résiste alors, c'est-à-dire préserve pratiquement toutes ses propriétés pour le relarguage de l'entité active, une fois dans le substrat humide.

Le système de conditionnement selon la présente invention permet également de préserver l'activité de l'entité active (cf. viabilité d'un micro-organisme), pendant le stockage de l'agent de traitement, jusqu'au moment où elle se trouve libérée ou relarguée, mais aussi pendant l'enrobage ou pelliculage dudit agent.

Une telle protection temporaire présente également un intérêt dans le substrat en permettant une libération de l'entité active, non pas au moment de la dépose de la semence dans le sol par exemple, mais une fois celle-ci déposée en milieu hydraté, voire le sol hydraté.

Au total, le système de conditionnement selon l'invention permet à l'entité active d'agir, lorsqu'on a besoin d'elle, et là où on a besoin d'elle, à proximité de la semence en cours de germination, puis dans la zone de développement du réseau racinaire de la plante, ou du collet de cette dernière, et ce uniquement après application.

En particulier, grâce à l'invention, l'agent de traitement peut être appliqué et conservé en état opératoire sur les semences elles-mêmes, par rapport à leurs conditions de conservation avant semis.

Par un choix approprié des polymères respectivement hydrophile et hydrophobe, d'une part, et du matériau solide inerte, d'autre part, le système de conditionnement selon l'invention est dégradable et sans risque pour l'environnement.

Par "inerte", on entend la propriété selon laquelle le matériau considéré est sans risque pour l'environnement et/ou la plante cultivée.

Par "délitable", on entend la propriété selon laquelle le matériau considéré se désintègre, et perd donc toute cohésion, par dissolution, mise en suspension, gonflement, hydrolyse, chimique ou enzymatique, dégradation chimique ou biologique, biodégradation, bio-assimilation, etc...

La présente invention présente les variantes d'exécution suivantes, pouvant être considérées seules ou en combinaison.

Le diamètre moyen des particules solides de l'agent de traitement agronomique selon l'invention est compris entre 5 et 500*µ*m, préférentiellement compris entre 5 et 50*µ*m, et par exemple d'environ 13*µ*m, et ce selon le procédé d'application retenu.

Le polymère hydrophile, constituant principal ou unique de la membrane des particules solides, est par nature filmogène et/ou émulsifiant. Il est par exemple choisi dans le groupe constitué par la polyvinylpyrollidone (PVP), les alcools polyvinyliques (PVA), les cires, les alginates,le chitosan, les polyosides modifiés ou non, dont les polysaccharides, les amidons modifiés ou non, les celluloses, les dextrines, les maltodextrines, les gommes arabique, de guar, d'acacia, les gélatines, et les protéines (soja, petit lait).

Le matériau solide des particules de l'agent de traitement selon l'invention est inerte au sens où son introduction dans le substrat, par exemple un sol, ne présente pratiquement aucun effet adverse, dont toxicité, aussi bien vis-à-vis dudit substrat, que vis-à-vis de la plante en cours de culture. Préférentiellement, il s'agit d'un matériau minéral choisi dans le groupe constitué par les zéolithes, les montmorillonites, le carbonate de calcium, les silices les terres de diatomée, dont de Tripoli ou de Kieselguhr et les ponces.

A titre d'exemple, le matériau minéral est une terre de diatomée modifiée, obtenue par réaction hydrothermique entre une diatomée siliceuse, de la chaux hydratée, et de l'eau.

Mais, dans certains cas, le matériau solide inerte des particules est un matériau non minéral, par exemple organique, choisi dans le groupe constitué par les polymères organiques de synthèse, dont les polystyrènes macroporeux, les polyacrylates, les matrices microporeuses de styrène, les polymères thermo-rétractables (par exemple polyacrylamides).

Par « matériau solide », selon la présente invention, on entend tout matériau ayant une stabilité dimensionnelle dans les conditions d'utilisation de l'agent de traitement agronomique, en particulier vis-à-vis de la température et de l'humidité relative.

Préférentiellement, le grain du matériau solide inerte, constituant le noyau des particules de l'agent de traitement selon l'invention, a la forme d'une microsphère. Cette forme peut être obtenue en particulier par une étape de sphéronisation, suivant le procédé d'obtention décrit ci-après.

Ce grain a préférentiellement une structure macroporeuse, cette porosité étant aussi bien une inter-porosité qu'une intra-porosité, comme par exemple dans le cas des terres de diatomée exemplifiées ci-après. A titre d'exemple, l'aire spécifique (BET) par rapport à l'air du matériau solide inerte, poreux, est au moins égale à 50, préférentiellement comprise entre 50 et 200, et par exemple égale à environ 140 m²/g.

Selon les applications ou utilisations, lesquelles sont fonction de la nature de l'entité active mise en oeuvre, le rapport pondéral de cette dernière par rapport aux grains de matériau solide inerte est au moins égal à 10⁻⁹, préférentiellement compris entre 10⁻⁶ et 1, et par exemple égal à environ 0,40.

Le polymère hydrophile peut être choisi pour devenir insoluble dans l'eau à partir d'une température au moins égale à 30°C, et par exemple à partir d'une température de 45°C, par exemple l'hydroxypropylcellulose vendue sous la dénomination KLUCEL^{®}, ou de 70°C, par exemple polyacrylamides (HDC). Il peut encore s'agir d'un alginate mis en présence d'ions calcium.

Une telle propriété présente un intérêt lorsque, comme décrit ci-après une autre membrane de nature hydrophobe est déposée sur la particule, à partir d'une phase aqueuse à température relativement élevée par exemple par coalescence ; en pareil cas, la membrane de polymère hydrophile se trouve ainsi préservée.

Selon la présente invention toutes sortes d'entités actives peuvent être ainsi conditionnées ou mises en forme, selon le traitement agronomique mis en oeuvre.

Il peut tout d'abord s'agir de produits stimulateurs de germination des semences, c'est-à-dire de molécules physiologiquement actives sur la germination.

L'entité active peut être un produit favorisant la croissance des plantes, par exemple hormones, ou augmentant leur résistance aux stress environnementaux, par exemple stimulateurs de défense, ou stabilisant le pH du substrat à sa proximité, ou encore un nutriment.

Il peut s'agir aussi d'un produit de protection contre les agents défavorables à la croissance des jeunes plants, en ce compris les virus et micro-organismes pathogènes, par exemple d'un produit fongicide, bactéricide, hématicide, insecticide, ou herbicide, agissant par contact, ingestion, ou diffusion gazeuse ; il s'agit par exemple de toute huile essentielle appropriée, par exemple extraite du thym. Tous ces produits renforcent les réactions de résistance de la plante, et/ou désinfectent ou régulent l'environnement de cette dernière.

L'entité active peut être un matériel biologique vivant, par exemple un micro-organisme non pathogène, par exemple au moins un champignon, ou une bactérie, ou un virus, si nécessaire avec un milieu assurant sa viabilité ; et ce micro-organisme, par exemple du type pseudomonas , bacillus , trichoderma , clonostachys , fusarium , rhizoctonia, etc...stimule la croissance de la plante, ou la protège contre les pathogènes précédemment définis.

Les variantes d'exécution suivantes doivent être considérées :
- le polymère hydrophobe est choisi dans le groupe constitué par des polymères de synthèse, dont poly(3-hydroxy octonoate (THO), polyhydroxyalcanoate (THA), les acides polylactiques de différents poids moléculaires (PLA), les poly (3-hydroxybutyrate-co-3 hydrovalerate) (PHVA), le poly-e-coprolactone (PCL), le styrène acrylate de butyle, le polyéthylène-téréphtalate (PET), les copolymères glycolique-lactique et les résines alkydes.
- préférentiellement, le polymère hydrophobe est un acide polylactique ayant une masse molaire entre 5 000 et 100 000, ou une résine alkyde.

L'invention concerne également un procédé d'obtention dudit agent agronomique.

Selon ce procédé :
a) on dispose du matériau inerte, à l'état solide et divisé,
b) on dispose de l'entité active retenue pour le traitement agronomique, en phase liquide,
c) on dispose d'un polymère hydrophile en phase aqueuse,
d) on dispose d'un polymère hydrophobe, délitable en phase aqueuse,
e) on imprègne le matériau inerte, solide et à l'état divisé, comportant une surface développée interne supérieure à sa surface apparente, par exemple poreux, avec l'entité active en phase liquide, pour obtenir un matériau intermédiaire, toujours solide et à l'état divisé, comportant l'entité active,
f) on revêt ce matériau intermédiaire, avec le polymère hydrophile en phase aqueuse, pour obtenir des globules, g) on élimine l'eau des globules, pour obtenir une poudre.

Préférentiellement, lors de l'étape (g), l'eau est éliminée notamment en lit d'air fluidisé ou en nébulisation-séchage.

A titre d'exemple, les étapes (f) et (g) sont effectuées simultanément, en fluidisant le matériau intermédiaire, et en pulvérisant sur ce dernier le polymère hydrophile en phase aqueuse, le tout dans un courant d'air, par exemple un courant d'air chaud, pour coalescer ledit polymère. Les conditions de séchage, notamment vitesse de séchage et température de l'air, sont adaptées à l'obtention d'une membrane satistaisante.

Lors de l'étape (e) précédemment définie, les conditions d'imprégnation sont prédéterminées pour charger le matériau inerte, à l'état solide et divisé, avec une quantité massique de l'entité active en phase liquide, comprise entre 20 et 200%, préférentiellement entre 30 et 50%, et par exemple égale à environ 43% de la masse initiale de l'entité active en phase liquide.

Ou préférentiellement le polymère hydrophile de la phase aqueuse représente au moins 1%, et préférentiellement 5 à 10% en poids de ladite phase aqueuse, pour obtenir une viscosité adéquate pour l'imprégnation du matériau intermédiaire.

A titre d'exemple, lorsque le polymère hydrophile est l'HPC, celui-ci est mis en solution dans l'eau à raison de 1 à 10% (m/m) de la phase aqueuse, et, après imprégnation selon l'étape (f) en surface du matériau intermédiaire avec la solution aqueuse, puis séchage selon l'étape (g), le polymère sec représente 5 à 50% (m/m) dudit matériau intermédiaire.

La poudre obtenue au terme du procédé défini précédemment est reprise pour des étapes supplémentaires selon lesquelles :
- on dispose donc de cette poudre,
- et on dispose d'un polymère hydrophobe, délitable, en phase aqueuse, et :
   h) on revêt la poudre avec le polymère hydrophobe en phase aqueuse, pour obtenir des globules,
   i) on élimine l'eau des globules, pour obtenir l'agent de traitement agronomique recherché.

Préférentiellement :
- le polymère hydrophobe en phase aqueuse est un latex ou une micro-suspension ou nano-suspension dudit polymère dans l'eau,
- les étapes (h) et (i) précédemment définies sont effectuées simultanément, en fluidisant la poudre, et pulvérisant sur cette dernière le polymère hydrophobe en phase aqueuse, le tout dans un courant d'air.

Par exemple, la suspension comprend 10% (m/m) du polymère hydrophobe par rapport à la phase aqueuse, et après séchage le même polymère hydrophobe, à l'état sec, représente de 10 à 50% (m/m) de la poudre soumise aux étapes (h) et (i).

Si cela est requis le procédé précédemment décrit peut comprendre une étape de sphéronisation de l'agent de traitement, après toute étape d'élimination de l'eau.

L'agent de traitement agronomique selon l'invention peut être mis en oeuvre par dépose directe dans un substrat, par exemple un sol, ou il peut être associé à un matériel végétal de reproduction ou multiplication d'une espèce végétale, notamment variété végétale, à l'état divisé, par exemple des semences, lequel matériel est ensuite déposé dans le substat nourricier. Dans ce dernier cas, chaque élément discret du matériel végétal précité, par exemple semences, est enrobé ou pelliculé avec une matrice d'un matériau perméable à l'eau, et éventuellement délitable, incorporant l'agent de traitement selon l'invention, distribué dans ladite matrice.

Un tel matériel consiste par exemple en une semence d'une espèce, notamment d'une variété potagère, ou florale, ou de grande culture, ou encore de semences d'arbres ou d'arbustes.

Comme dit précédemment, lorsqu'un enrobage ou pelliculage est effectué avec un matériau délitable, à l'état humide ou en phase aqueuse, la deuxième membrane, ou autre membrane, des particules de l'agent de traitement agronomique permet de supporter l'hydratation temporaire ainsi faite, jusqu'à séchage complet du matériel végétal enrobé ou pelliculé, et ce en préservant la structure et l'activité de l'agent de traitement agronomique.

En définitive, la présente invention concerne tout traitement agronomique, selon lequel on dispose dans un substrat humide, ou hydraté, par exemple un sol, un matériel végétal de reproduction ou multiplication d'une espèce, notamment variété végétale, par exemple des semences, selon lequel on dispose dans le même substrat un agent de traitement tel que défini précédemment, en sorte que l'entité active de traitement agronomique soit relarguée ou libérée à proximité immédiate de la semence ou dans la zone d'enracinement ou du collet de l'espèce végétale considérée, en développement ou croissance.

Deux variantes d'un tel procédé peuvent être considérées :
- selon une première variante, par exemple de manière extemporanée, l'agent de traitement agronomique est mélangé avec le matériel végétal de reproduction ou multiplication, lui-même sous forme solide et à l'état divisé, et le mélange ainsi obtenu, toujours sous forme solide et divisée, est disposé dans le substrat humide,
- selon une deuxième variante, avant sa disposition dans le substrat humide, l'agent de traitement agronomique est ou se trouve adjoint, de manière solidaire, au matériel végétal de reproduction ou multiplication, sous forme solide et à l'état divisé, par exemple par enrobage ou pelliculage tel que décrit précédemment.

Les exemples suivants illustrent la présente invention.

### Exemple 1 : Obtention d'un matériau intermédiaire, à l'état solide et divisé, à partir d'un matériau minéral, poreux à l'état solide et divisé, et d'une entité active en phase liquide.

Selon cet exemple, l'entité active pour le traitement agronomique consiste en une huile essentielle, ayant de manière connue en soi une action désinfectante et de protection contre les agents pathogènes dans un sol. Cette huile essentielle est par exemple l'huile essentielle de thym,, fabriquée et vendue par la Société FLORE DE SAINTONGE, sous la dénomination HETHYT6OOR,. Cette huile essentielle sera désignée ci après par HE.

Selon cet exemple, le matériau minéral, poreux, à l'état solide et divisé, est une terre de diatomée modifiée, à savoir par réaction entre une diatomée siliceuse, la chaux hydratée, et l'eau, par exemple celle vendue par la Société WORLD MINERALS sous la dénomination CALFLO C^{®}. Les grains de ce matériau sont irréguliers, anguleux, et présentent une morphologie offrant une intra-porosité et une inter-porosité, ayant globalement une aire spécifique de 140m² g⁻¹ (point BET) par rapport à l'air. Le diamètre des grains est de l'ordre de 5 à 50 µm, avec une taille moyenne de 13µm.

Le protocole expérimental suivant est mis en oeuvre. Avant imprégnation, la CALFO C est lavée à l'eau distillée, afin d'éliminer les impuretés, et mise dans l'étuve sous vide à une température de 80°C pendant une journée.

Puis le protocole expérimental suivant est mis en oeuvre:
1. La CALFLO C, ci-après désignée par TdD est tamisée ;
2. La TdD est imprégnée, comme décrit ci-après, en sorte d'obtenir différents taux massiques d'imprégnation en HE (masse d'HE rapportée à la masse totale TdD + HE), respectivement de 20%, 33 %, 43 % et 50 % m/m ; il suffit pour cela de faire varier la durée de l'imprégnation décrite ci-après.
3. Puis la cinétique de libération/relarguage de l'HE, par diffusion gazeuse, est mesurée par suivi de la perte pondérale dans le temps.

S'agissant de l'imprégnation, l'HE et la TdD sont introduites dans un pilulier de 100ml, avec des billes d'agate pour que l'HE se répartisse uniformément dans la TdD, et que les sites interstitiels de la TdD soient accessibles. Le pilulier est mis sous agitation pendant 20mn dans un mélangeur à rouleaux. Après cette opération, la TdD se trouve uniformément imprégnée d'HE. Les clichés en microscopie à balayage (MEB), avant et après mélange, montrent que le brassage dans le mélangeur n'affecte pas la taille des grains de le TdD.

La quantité d'HE retenue dans et imprégnant la TdD est mesurée selon le protocole opératoire ci-après :
- Extraction de l'HE avec du dichlométhane (CH₂cl₂) ;
- Dosage de l'HE dans le dichlométhane dans l'ultra-violet, à 273 nm.

Pour conférer au matériau intermédiaire la forme d'une poudre sèche, on fait le choix d'un taux d'imprégnation (masse de l'HE rapportée à la masse totale de TdD et HE) de 43 %

Les cinétiques de relarguage à l'air libre sont suivies par simple pesée, ou analyse thermo gravimétrique (ATG).

On observe deux étapes successives de relarguage, par désorption :
- une première étape de désorption rapide pouvant correspondre au départ de l'HE multi-couches, couvrant la surface fractale de la TdD ;
- et une deuxième étape de désorption plus lente, pouvant correspondre au départ de l'HE retenue dans les porosités inter et intra-grains de la TdD.

Pratiquement toute l'HE retenue dans la TdD peut donc être relarguée assez rapidement.

### Exemple 2: Encapsulation du matériau intermédiaire obtenu selon l'exemple 1 avec un polymère hydrophile, pour obtenir une poudre.

On dispose donc du matériau intermédiaire, désigné ci-après par Mi, tel qu'obtenu selon l'exemple 1, par conséquent, sous forme de micro-grains.

On fait le choix de revêtir ces derniers avec un polymère hydrophile en phase aqueuse. Le polymère hydrophile retenu est dégradable.

En laboratoire, on encapsule le matériau intermédiaire précité selon le protocole ci-après d'émulsion sèche :
1. On dispose d'une solution aqueuse du polymère hydrophile ;
2. On disperse le Mi dans cette solution aqueuse pour obtenir une dispersion ;
3. On étale la dispersion aqueuse sur des plaques de verre, et on évapore de manière contrôlée l'eau, pour précipiter par coalescence ou coacervation le polymère hydrophile autour des grains du Mi, et obtenir une poudre.

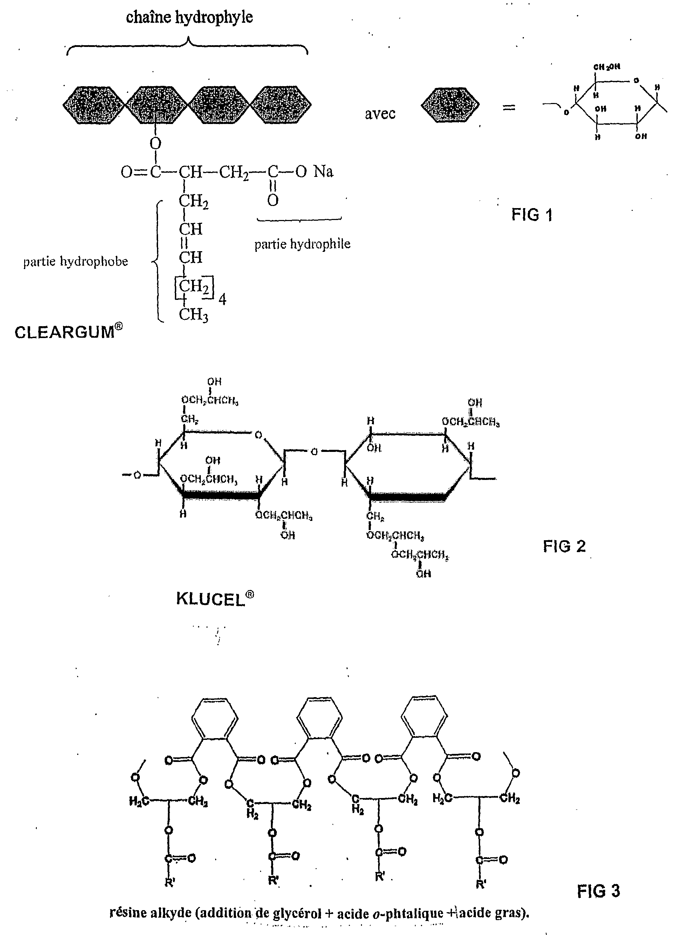

Deux polymères hydrophiles ont été retenus et testés, à savoir :
- un amidon modifié, par exemple celui vendu par la Société ROQUETTE sous la dénomination CLEARGUM^{®}, correspondant à la formule chimique montrée en Figure 1 ;
- une hydroxypropylcellulose, par exemple celle vendue par la société AQUALON sous la dénomination KLUCEL^{®}, correspondant à la formule chimique montrée en Figure 2

S'agissant de KLUCEL^{®}, il faut noter qu'il est insoluble dans l'eau à partir de 45°C, ce qui, comme montré ci-après dans l'exemple 4, permet de revêtir ultérieurement la poudre obtenue selon le présent exemple, avec un polymère hydrophobe (acide poly-lactique ou résine alkyde) en phase aqueuse et à chaud, sans risquer de dissoudre ou de provoquer le gonflement de la membrane (ou première membrane) du polymère hydrophile. Dans la gamme des KLUCEL, différents grades ont été mis en oeuvre, dits J, et M, différant les uns des autres par leurs poids moléculaires, à savoir respectivement 140.000, et 850.000.

Le protocole expérimental suivant est mis en oeuvre :
1. on part d'un Mi obtenu selon l'exemple 1, à 43 % (m/m) en HE;
2. on dispose d'une solution aqueuse d'un polymère hydrophile choisi comme indiqué précédemment, à 1 ou 2 % en poids dudit plymère par rapport au poids d'eau;
3. à l'aide d'une pale défloculeuse, tournant à 1000 tours/minute, à température ambiante, on agite la solution aqueuse selon (2), et on ajoute le Mi, pour obtenir une dispersion aqueuse du Mi, agitée pendant 1 minute, le Mi représentant dans tous les essais rapportés ci-après 20 % en poids de la dispersion aqueuse, soit du poids total Mi plus solution aqueuse du polymère ; l'étape de dispersion est mise en oeuvre en maintenant constante la masse du Mi, et en faisant varier la masse du polymère hydrophile encapsulant les grains du Mi, et en faisant varier la masse du polymère hydrophile encapsulant les grains du Mi ; on choisit néanmoins de déposer une quantité minimum de polymère hydrophile autour des grains du Mi.
4. selon le même protocole d'émulsion sèche que celui décrit à l'exemple 1, la dispersion obtenue est déposée et étalée sur différentes plaques de verre, en fines couches,
5. les plaques sont ensuite placées à l'air libre, sous hotte, pendant 1 à 2 heures ; l'humidité de surface décroît rapidement ; lorsque le taux d'humidité atteint 7 à 23%, la membrane d'encapsulation obtenue est semi-perméable, c'est-à-dire qu'elle permet la diffusion de l'eau, tout en retenant ou ralentissant la diffusion des composés de l'HE,
6. une fois les capsules sèches, elles sont récupérées, et séparées, si nécessaire, par un très léger broyage au mortier, pour obtenir une poudre,
7. à partir de la poudre ainsi obtenue, on calcule le rendement en imprégnation d'HE, en mesurant la quantité d'HE retenue dans la poudre, comme indiqué précédemment ; et on observe la cinétique de diffusion à l'air libre de l'HE, en suivant la perte pondérale de la poudre, avec 1g de cette dernière disposée dans une coupelle mise sous hotte ventilée.

Les résultats d'essais d'encapsulation sont donnés dans le tableau I

**Tableau I**

| | **Mélanges initiaux** | | | **Produits finis (poudre)** | | | | |
|---|---|---|---|---|---|---|---|---|
| **Essais** | **Polymère hydrophile** | **Solution aqueuse [Polymère]ₑₐᵤ g /100 g H₂O** | **Masse du Polymère rapportée à (m (Mi)** | **% TdD** | **% HE** | **% Polym** | **Temps séchage** | **Rdt (HE)** |
| E1 | HPC 80 000 g.mol⁻¹ | 1 % | 5 % | 54,42 | 40,82 | 4,76 | 1h30- 2h | **67 %** |
| E2 | HPC 80 000 g.mol⁻¹ | 2 % | 10 % | 51,95 | 38,96 | 9,09 | 1h30- 2h | **74 %** |
| E4 | Amidon modifié | 1 % | 5 % | 54,42 | 40,82 | 4,76 | 1h30- 2h | **55 %** |
| E5 | Amidon modifié | 2 % | 10 % | 51,95 | 38,96 | 9,09 | 1h30- 2h | **56 %** |

| | | | | | | | | |
|---|---|---|---|---|---|---|---|---|
| HPC (80 000g.mol⁻¹) = Klucel^{®} E Mi = TdD + HE Cleargum^{®} = Amidon modifié | | | | | | | | |

Les rendements en HE encapsulée dans la poudre obtenue sont corrects. Le rendement augmente lorsque la concentration du polymère hydrophile dans l'eau augmente. Lorsque l'encapsulation est effectuée à chaud (65°C), le rendement diminue.

S'agissant du relarguage, les observations suivantes sont faites :
- une paroi de membrane plus épaisse ralentit la diffusion de l'HE.
- l'asymptote oblique est cependant atteinte plus lentement pour les grains de Mi encapsulés par de l'HPC que pour l'amidon modifié (par exemple CLEARGUM). L'asymptote devient d'ailleurs d'autant plus horizontale, et pour des temps de rétention plus longs, que la masse molaire en HPC augmente et que la quantité déposée autour des grains du Mi augmente.

Ainsi, en faisant varier la gamme de Klucel^{®}, on peut déterminer si la viscosité, la masse ou encore la quantité de polymère hydrophile influence le relarguage de l'HE.

Lors de l'encapsulation, on fait donc varier la masse molaire de l'HPC.

Le mode opératoire est le même que précédemment. Le rendement de l'encapsulation est calculé comme précédemment.

Les résultats sont regroupés dans le tableau II ci-après :

**Tableau II**

| | | **Solution aqueuse** | | **Produits finis** | **(poudre)** | | | |
|---|---|---|---|---|---|---|---|---|
| **Essais** | **Mw g.mol⁻¹** | **[Polymère] (g/100g H₂O)** | **Polymère (g/100g Mi)** | **% TdD** | **% HE** | **% P** | **Temps de séchage (air)** | **Rdt (HE)** |
| E1 | 140 000 | 1 % | 5 % | 54,42 | 40,82 | 4,76 | 1h40 | 66% |
| E2 | 140 000 | 2 % | 10 % | 51,95 | 38,96 | 9,09 | 1h40 | 68% |
| E3 | 850 000 | 1 % | 5 % | 54,42 | 40,82 | 4,76 | 1h10 | 74% |
| E4 | 850 000 | 2 % | 10 % | 51,95 | 38,96 | 9,09 | 1h30 | 80% |

A partir de ce tableau, les observations suivantes peuvent être faites :
- Les rendements obtenus sont convenables et supérieurs à 66 %.
- Pour une même masse molaire, lorsque la quantité de polymère augmente et lorsque la viscosité augmente, les rendements d'encapsulation sont améliorés.
- A même quantité de polymère hydrophile déposée et à même concentration de polymère dans la solution (et approximativement même temps de séchage), les rendements obtenus avec hydroxypropylcellulose de forte masse molaire (850 000 g.mol⁻¹) sont plus élevés que ceux résultant des encapsulations avec hydroxypropylcellulose de masse molaire 140 000 g.mol⁻¹. La plus forte viscosité de cette solution explique ces observations.
- Dans l'ensemble, quelle que soit la masse molaire de l'HPC, la diffusion est ralentie lorsque la quantité de polymère hydrophile augmente.
- Sur le plan cinétique, toutes les courbes de relarguage présentent la même allure: une montée relativement rapide correspondant, soit à des grains mal recouverts, soit à une paroi de membrane plus ou moins fissurée (des effets « Burst » sont observés dans la plupart des diffusions), suivis d'une montée vers une asymptote horizontale d'autant plus lente que la membrane est plus épaisse.

### Exemple 3 : Encapsulation de la poudre obtenue selon l'exemple 2 avec un polymère hydrophobe, pour obtenir un agent de traitement agronomique, à l'état solide et divisé.

De manière générale, selon cet exemple, on dispose d'une poudre telle qu'obtenue selon l'exemple 2 et, à partir d'un polymère hydrophobe présentant un bon effet barrière à l'eau, et une vitesse de dégradation dans le sol relativement rapide, on forme une dispersion aqueuse dudit polymère. Puis on revêt la poudre avec le polymère hydrophobe, pour obtenir des globules, et on élimine l'eau de ces derniers pour obtenir l'agent de traitement recherché.

Le polymère hydrophobe mis en oeuvre est un poly (acide lactique) ou PLA, sous la forme de nano-particules dispersées dans l'eau, le PLA étant particulièrement intéressant en raison de sa nature filmogène, et de sa dégradation possible par hydrolyse contrôlée selon sa masse molaire.

Le polymère hydrophobe mis en oeuvre est aussi une résine alkyde, filmogène, dispersée dans l'eau sous forme de nano-particules, et répondant de manière générale à la formule chimique selon figure 3 ; par exemple, la résine Uradil AZ 554-Z50, fabriquée et vendue par la société DSM, qui requiert pour sa réticulation un agent siccatif, à savoir le Nuodex Combi AQ, également vendu par la même société DSM.

La filmification de cette résine est obtenue, d'abord par coalescence, puis par siccativité.

Deux séries d'essais, effectuées avec différents PLA, ont été effectuées respectivement en conditions de laboratoire, par émulsion sèche sur plaque, et en conditions industrielles, par application en lit d'air fluidisé mais selon la technique de l'émulsion sèche.

Différentes suspensions aqueuses redispersables de PLA en nano-particules, colloïdales, ont été obtenues et ont été testées, de façon préliminaire, pour enrober des granulés d'engrais, afin de déterminer les conditions opératoires optimales de dépose et de filmogénèse (formation d'une membrane).

Ces conditions opératoires étant fixées, deux PLA différents ont été testés, l'un de faible masse molaire, à savoir 7000, avec un Tg de 45°C, et l'autre de masse molaire plus importante, à savoir 35.000, avec un Tg de 55°C.

Le protocole opératoire suivant est alors suivi.
1. On dispose d'une poudre (microparticules) telle qu'obtenue selon l'exemple 2. Deux types de poudre ont été testées :
   - la première dont les microparticules contiennent chacune un noyau TdD+HE (HE représentant en poids 43% du poids total TdD + HE), et une membrane de HPC ayant un poids moléculaire de 80 000, la membrane représentant 5 ou 50% (m/m) du noyau (TdD + HE),
   - la seconde dont les microparticules contiennent chacune un noyau TdD + HE (HE représentant en poids 43% du poids total TdD + HE), et une membrane de HPC ayant un poids moléculaire de 850 000, la membrane représentant 5 ou 50% (m/m) du noyau (TdD + HE).
2. on dispose d'un latex de PLA en base aqueuse, le PLA représentant 15% (m/v) de la phase aqueuse ; les deux PLA de poids moléculaires différents, identifiés ci-dessus ont été testés,
3. on disperse la poudre dans le latex, avec une pale défloculeuse tournant à 800 tours par minute, pendant une minute, à 45°, pour obtenir une dispersion aqueuse,
4. selon la technique dite d'émulsion sèche, on étale la dispersion aqueuse sur des plaques de verre, lesquelles sont ensuite séchées en étuve à 58°C, pendant 30 à 45 minutes, puis on récupère les particules ainsi obtenues, éventuellement après séparation dans un mortier,
5. Sur ces particules, trois déterminations sont effectuées :
   - on calcule le rendement en HE encapsulée, grâce à la double membrane, selon la méthode décrite précédemment,
   - on détermine la cinétique de diffusion à l'air libre, par suivi de la perte pondérale des particules
   - on détermine la cinétique de diffusion, en mélangeant et incorporant les particules dans du sable, et en déterminant la quantité résiduelle d'HE dans les particules, selon la même méthode.

Les résultats d'essais obtenus, par émulsion sèche en laboratoire, sont rassemblés dans le tableau III ci-après :

**Tableau III**

| **Essais** | **Mw(HPC) g.mol⁻¹** | **HPC (g/100g_{Mi})** | **Mw(PLA) g.mol⁻¹** | **PLA (g/100g _{poudre})** | **Produits % TdD** | **Finis % HE** | **% HPC** | **% PLA** | **Rdt (HE 2^{ème} encaps)** | **Rdt (HE global)** |
|---|---|---|---|---|---|---|---|---|---|---|
| E1 | 80 000 | 5 % | 7000 | 10 % | 49,47 | 37,11 | 4,33 | 9,09 | -- | - |
| E2 | 850 000 | 5 % | 7000 | 10 % | 49,47 | 37,11 | 4,33 | 9,09 | 41 % | 35 % |
| E3 | 80 000 | 50 % | 7000 | 10 % | 34,63 | 25,97 | 30,30 | 9,09 | 57 % | 42 % |
| E4 | 80 000 | 5 % | 7000 | 50 % | 36,28 | 27,21 | 3,17 | 33,33 | 54 % | 36 % |
| E5 | 850 000 | 5 % | 7000 | 50 % | 36,28 | 27,21 | 3,17 | 33,33 | 45 % | 38 % |
| E6 | 80 000 | 50 % | 7000 | 50 % | 25,40 | 19,05 | 22,22 | 33,33 | 58 % | 43 % |
| E7 | 80 000 | 5 % | 35 000 | 10 % | 49,47 | 37,11 | 4,33 | 9,09 | 64 % | 43 % |
| E8 | 850 000 | 5 % | 35 000 | 10 % | 49,47 | 37,11 | 4,33 | 9,09 | 39 % | 33 % |
| E9 | 80 000 | 50 % | 35 000 | 10 % | 34,63 | 25,97 | 30,30 | 9,09 | 73 % | 54% |
| E10 | 80 000 | 5 % | 35 000 | 50 % | 36,28 | 27,21 | 3,17 | 33,33 | 63 % | 42 % |
| E11 | 850 000 | 5 % | 35 000 | 50 % | 36,28 | 27,21 | 3,17 | 33,33 | 55 % | 47 % |
| E12 | 80 000 | 50 % | 35 000 | 50 % | 25,40 | 19,05 | 22,22 | 33,33 | 60 % | 44 % |

| | | | | | | | | | | |
|---|---|---|---|---|---|---|---|---|---|---|
| Mi = TdD+ HE Poudre = TdD+ HE+ HPC | | | | | | | | | | |

Par "rendement de la deuxième encapsulation", on entend la quantité d'HE demeurant dans les particules, après encapsulation avec le polymère hydrophobe, par rapport à la quantité d'HE présente au départ dans la poudre.

Par "rendement global", on entend la quantité d'HE demeurant dans les particules, après encapsulation avec le polymère hydrophobe, par rapport à la quantité initiale d'HE mise en oeuvre pour imprégner la TdD.

Les observations suivantes sont alors faites :
- le rendement de la deuxième encapsulation, par émulsion sèche, varie de 41 % à 73% ; au cours de cette étape, l'HPC protège l'HE de la diffusion,
- le rendement global ne varie pas avec la masse de PLA déposée sur la poudre,
- la diffusion à l'air libre est notablement retardée par augmentation de la quatité de PLA appliquée au cours de la deuxième encapsulation.],
- la diffusion dans le sable montre qu'un relarguage différé à 30 jours peut être atteint, par exemple pour une dépose de type semis en substrat humide.

S'agissant des essais de type industriel, ceux-ci ont été effectués dans des conditions industrielles d'émulsion sèche, avec un lit fluidisé mis en oeuvre avec un matériel "Mini-Glatt", fabriqué et vendu par la Société GLATT.

Avec cet appareil, on fluidise la poudre obtenue selon l'exemple 2, pour obtenir un lit fluidisé, et on pulvérise sur la poudre ainsi fluidisée le polymère hydrophobe en dispersion aqueuse, le tout dans un courant d'air chaud, moyennant quoi, comme en laboratoire, on revêt la poudre avec le polymère hydrophobe, pour obtenir des gouttelettes en suspension gazeuse, et on élimine l'eau de ces dernières pour obtenir l'agent de traitement recherché.

Pour les essais rapportés ci-après, l'appareil précité est mis en oeuvre de la manière suivante :
- l'air de process est fixé et contrôlé à une température de 80 °C, et à une pression de 0,8 bars,
- 20 g de la poudre sont introduites dans la cuve à produit,
- la dispersion de polymère hydrophobe comporte 10% d'extrait sec, et elle est pulvérisée avec un débit liquide de 2-3ml/mn, et une pression d'air de pulvérisation de 0,8 bars,
- la température intérieure dans le cône de pulvérisation est maintenue à 50°C.

Les résultats d'essais de deuxième encapsulation de type émulsion sèche en lit fluidisé, sont rassemblés dans le tableau IV ci-après :

**Tableau IV**

| **Essais** | **Mw(HPC) g.mol⁻¹** | **HPC (g/100g _{Mi})** | **Mw(PLA) g.mol⁻¹** | **PLA (g/100g _{Poudre})** | **Produits % TdD** | **finis % HE** | **% HPC** | **% PLA** | **Rdt (HE 2^{ème} encaps)** | **Rdt (HE global)** |
|---|---|---|---|---|---|---|---|---|---|---|
| E1 | 80 000 | 5 % | 7000 | 10 % | 49,47 | 37,11 | 4,33 | 9,09 | 96 % | 64 % |
| E2 | 850 000 | 5 % | 7000 | 10 % | 49,47 | 37,11 | 4,33 | 9,09 | 59 % | 50 % |
| E3 | 80 000 | 50 % | 7000 | 10 % | 34,63 | 25,97 | 30,30 | 9,09 | 73 % | 54 % |
| E4 | 80 000 | 5 % | 7000 | 50 % | 36,28 | 27,21 | 3,17 | 33,33 | 75 % | 50 % |
| E5 | 850 000 | 5 % | 7000 | 50 % | 36,28 | 27,21 | 3,17 | 33,33 | 67 % | 57 % |
| E6 | 80 000 | 50 % | 7000 | 50 % | 25,40 | 19,05 | 22,22 | 33,33 | 74 % | 55 % |
| E10 | 80 000 | 5 % | 35 000 | 10 % | 49,47 | 37,11 | 4,33 | 9,09 | 84 % | 56 % |
| E11 | 850 000 | 5 % | 35 000 | 10 % | 49,47 | 37,11 | 4,33 | 9,09 | 64 % | 54 % |
| E12 | 80 000 | 50 % | 35 000 | 10 % | 34,63 | 25,97 | 30,30 | 9,09 | 81 % | 60 % |
| E13 | 80 000 | 5 % | 35 000 | 50 % | 36,28 | 27,21 | 3,17 | 33,33 | 88 % | 59 % |
| E14 | 850 000 | 5 % | 35 000 | 50 % | 36,28 | 27,21 | 3,17 | 33,33 | 40 % | 34 % |
| E15 | 80 000 | 50 % | 35 000 | 50 % | 25,40 | 19,05 | 22,22 | 33,33 | 70 % | 47 % |

| | | | | | | | | | | |
|---|---|---|---|---|---|---|---|---|---|---|
| Mi = TdD+ HE Poudre = TdD+ HE+ HPC | | | | | | | | | | |

Les observations suivantes peuvent être faites:
- On obtient de meilleurs rendements en lit fluidisé, qu'en condition de laboratoire,
- Les cinétiques de diffusion à l'air libre montrent que la relarguage à l'air libre est mieux contrôlé par une deuxième encapsulation réalisée en lit d'air fluidisé.

Toujours en conditions industrielles de lit fluidisé, avec le même appareil que celui défini précédemment, avec la résine alkyde précédemment identifiée, les résultats suivants sont obtenus, et rassemblés dans le tableau V.

**Tableau V**

| **Essais** | **Mw(HPC) g.mol⁻¹** | **HPC (g/100g _{Mi})** | **Résines alkydes** | **R.A. (g/100g _{poudre})** | **Produits % TdD** | **finis % HE** | **% HPC** | **% R.A.** | **Rdt (HE 2^{ème} encaps)** | **Rdt (HE global)** |
|---|---|---|---|---|---|---|---|---|---|---|
| E1 | 80 000 | 5 % | AZ | 10 % | 49,47 | 37,11 | 4,33 | 9,09 | 96 % | 67 % |
| E2 | 850 000 | 5 % | AZ | 10 % | 49,47 | 37,11 | 4,33 | 9,09 | 60 % | 51 % |
| E3 | 80 000 | 50 % | AZ | 10 % | 34,63 | 25,97 | 30,30 | 9,09 | 99 % | 75 % |
| E4 | 80 000 | 5 % | AZ | 50 % | 36,28 | 27,21 | 3,17 | 33,33 | 87 % | 58 % |
| E5 | 850 000 | 5 % | AZ | 50 % | 36,28 | 27,21 | 3,17 | 33,33 | 36 % | 31 % |
| E6 | 80 000 | 50 % | AZ | 50 % | 25,40 | 19,05 | 22,22 | 33,33 | 58 % | 43 % |

| | | | | | | | | | | |
|---|---|---|---|---|---|---|---|---|---|---|
| Mi = TdD+ HE Poudre = TdD+ HE+ HPC AZ : Uradil AZ 554- Z50 + siccatifs RA = résine alkyde | | | | | | | | | | |

A partir de ce tableau et des cinétiques de diffusion à l'air libre on constate, après un premier dégazage, un arrêt de la diffusion à l'air libre.

Et à partir des diffusions dans le sable, on constate que, après dépose dans un substrat humide, la diffusion ne se déclenche qu'après un délai de quinze jours.

## Revendications

1. Agent de traitement agronomique d'une plante vivante supportée par un substrat humide, par exemple un sol, ledit agent se présentant à l'état solide et divisé, et comprenant des particules solides comportant au moins une entité active pour le traitement agronomique, **caractérisé en ce que** chaque particule comprend:
- un noyau constitué par un grain d'un matériau solide inerte vis-à-vis du substrat, comportant une surface développée interne supérieure à sa surface apparente, et adapté de ce fait pour une adsorption et/ou absorption,
- l'entité active de traitement agronomique, absorbée dans le grain et/ou adsorbée à la surface dudit grain,
- une première membrane encapsulant le noyau comprenant l'entité active, constituée par au moins un polymère hydrophile, perméable vers l'extérieur vis-à-vis de l'entité active, lorsqu'elle est en contact direct ou indirect avec le substrat humide,
- une seconde membrane, ladite seconde membrane étant constituée par au moins un polymère hydrophobe délitable au contact du substrat et ladite seconde membrane revêtissant la première membrane.

2. Agent selon la revendication 1, **caractérisé en ce que** le diamètre moyen des particules solides est compris entre 5 et 500µm, préférentiellement compris entre 5 et 50µm et par exemple d'environ 13µm.

3. Agent selon la revendication 1, **caractérisé en ce que** le polymère hydrophile, notamment filmogène et/ou émulsifiant, est choisi dans le groupe constitué par la polyvinylpyrollidone (PVP), les alcools polyvinyliques (PVA), les alginates, le chitosan, les polyosides modifiés ou non, dont les polysaccharides, les amidons modifiés ou non, les celluloses, les dextrines, les maltodextrines, les gommes arabiques, de guar, d'acacia, les gélatines, et les protéines (soja, petit lait).

4. Agent selon la revendication 1, **caractérisé en ce que** le matériau solide inerte est un matériau minéral choisi dans le groupe constitué par les zéolithes, les montmorillonites, le carbonate de calcium, les silices, les terres de diatomée, dont de Tripoli ou de Kieselguhr et les ponces.

5. Agent selon la revendication 4, **caractérisé en ce que** le matériau minéral est une terre de diatomée modifiée, obtenue par réaction hydrothermique entre une diatomée siliceuse, de la chaux hydratée, et de l'eau.

6. Agent selon la revendication 1, **caractérisé en ce que** le matériau solide inerte est un matériau non minéral, choisi dans le groupe constitué par les polystyrènes macroporeux, les polyacrylates, les matrices micro poreuses de styrène, les polymères thermo-rétractables, par exemple les polyacrylamides.

7. Agent selon la revendication 1, **caractérisé en ce que** le grain a la forme d'une microsphère.

8. Agent selon la revendication 1, **caractérisé en ce que** le grain a une structure macroporeuse.

9. Agent selon la revendication 1, **caractérisé en ce que** l'aire spécifique (BET) par rapport à l'aire du matériau solide inerte est au moins égale à 50, préférentiellement comprise entre 50 et 200, et par exemple égale à 140 m²/g.

10. Agent selon la revendication 1, **caractérisé en ce que** le rapport pondéral de l'entité active de traitement agronomique par rapport aux grains de matériau solide inerte est au moins égal à 10⁻⁹ préférentiellement compris entre 10⁻⁶ et 1 et par exemple égal à environ 0,40.

11. Agent selon la revendication 1, **caractérisé en ce que** le polymère hydrophile est insoluble dans l'eau à partir d'une température au moins égale à 30°C, et par exemple à partir d'une température de 45°C ou 70°C.

12. Agent selon la revendication 1, **caractérisé en ce que** l'entité active pour le traitement agronomique est un produit stimulateur de germination des semences.

13. Agent selon la revendication 1, **caractérisé en ce que** l'entité active pour le traitement agronomique est un produit favorisant la croissance des plantes, par exemple augmentant la résistance aux stress environnementaux, ou stabilisant le pH, ou un nutriment.

14. Agent selon la revendication 1, **caractérisé en ce que** l'entité active pour le traitement agronomique est un produit de protection contre les agents défavorables à la croissance des jeunes plantes, y compris virus et micro-organismes pathogènes, par exemple une huile essentielle.

15. Agent selon la revendication 1, **caractérisé en ce que** l'entité active pour le traitement agronomique est un micro-organisme, par exemple au moins un champignon ou une bactérie, stimulant la croissance d'une plante, ou protégeant cette dernière contre les pathogènes.

16. Agent selon la revendication 1, **caractérisé en ce que** le polymère hydrophobe est choisi dans le groupe constitué par des polymères de synthèse, dont poly(3-hydroxy octonoate (THO), polyhydroxyalcanoate (THA), les acides polylactiques de différents poids moléculaires (PLA), les poly (3-hydroxybutyrate-co-3 hydrovalerate) (PHVA), le poly-e-coprolactone (PCL), le styrène acrylate de butyle, le polyéthulène-téréphtalate (PET), les copolymères glycolique-lactique et les résines alkydes.

17. Agent selon la revendication 1, **caractérisé en ce que** le polymère hydrophobe est un polylactique ayant une masse molaire entre 5 000 et 100 000, ou une résine alkyde.

18. Procédé d'obtention d'un agent de traitement agronomique selon l'une quelconque des revendications 1 à 17 selon lequel :
a) on dispose du matériau inerte, à l'état solide et divisé,
b) on dispose de l'entité active pour le traitement agronomique, en phase liquide,
c) on dispose d'un polymère hydrophile en phase aqueuse,
d) on dispose d'un polymère hydrophobe, délitable en phase aqueuse, **caractérisé en ce que**:
e) on imprègne le matériau inerte, solide et à l'état divisé, comportant une surface développée interne supérieure à sa surface apparente avec l'entité active en phase liquide, pour obtenir un matériau intermédiaire, solide et à l'état divisé, comportant l'entité active,
f) on revêt le matériau intermédiaire, solide et à l'état divisé, avec le polymère hydrophile en phase aqueuse, pour obtenir des globules,
g) on élimine l'eau des globules, pour obtenir une poudre.
h) on revêt la poudre avec le polymère hydrophobe en phase aqueuse, pour obtenir des globules
i) on élimine l'eau des globules, pour obtenir l'agent de traitement.

19. Procédé selon la revendication 18, **caractérisé en ce que** lors de l'étape g) l'eau est éliminée selon les techniques dites d'émulsion sèche, notamment en lit d'air fluidisé ou en nébulisation-séchage.

20. Procédé selon la revendication 18, **caractérisé en ce que** les conditions d'imprégnation sont prédéterminées pour charger le matériau inerte avec une quantité massique de l'entité active en phase liquide, comprise entre 20 et 200%, préférentiellement entre 30 et 50%, et par exemple égale à environ 43% de la masse initiale de l'entité active en phase liquide.

21. Procédé selon la revendication 18, **caractérisé en ce que** les étapes (e) et (f) sont effectuées simultanément, en fluidisant le matériau intermédiaire, et en pulvérisant sur ce dernier le polymère hydrophile en phase aqueuse, le tout dans un courant d'air.

22. Procédé selon la revendication 18, **caractérisé en ce que** le polymère de la phase aqueuse représente au moins 1 %, et préférentiellement 5 à 10% en poids de ladite phase aqueuse.

23. Procédé selon la revendication 22, **caractérisé en ce que** le polymère hydrophobe en phase aqueuse est un latex ou une micro-suspension ou nano-suspension dans l'eau.

24. Procédé selon la revendication 22, **caractérisé en ce que** les étapes (g) et (h) sont effectuées simultanément, en fluidisant la poudre, et pulvérisant sur cette dernière le polymère hydrophobe en phase aqueuse, le tout dans un courant d'air.

25. Procédé selon l'une quelconque des revendications 18 à 24, **caractérisé en ce qu'**il comprend une étape de sphéronisation de l'agent de traitement, après une étape d'élimination de l'eau.

26. Matériel végétal de reproduction ou multiplication d'une espèce végétale, notamment variété végétale, à l'état divisé, par exemple semences, comprenant des éléments discrets, **caractérisé en ce que** chaque élément discret est enrobé ou pelliculé avec une matrice d'un matériau délitable incorporant un agent de traitement selon l'une quelconque des revendications 1 à 17.

27. Matériel selon la revendication 26, **caractérisé en ce qu'**il consiste en une semence d'une espèce, notamment d'une variété, potagère, ou florale, ou de grande culture, ou en une semence d'arbre ou d'arbuste.

28. Procédé de traitement agronomique, selon lequel on dispose dans un substrat humide, par exemple un sol, un matériel végétal de reproduction ou multiplication d'une espèce, par exemple des semences, notamment d'une variété végétale, **caractérisé en ce qu'**on dispose dans le même substrat un agent de traitement agronomique selon l'une quelconque des revendications 1 à 17, en sorte que l'entité active de traitement agronomique soit relarguée dans la zone d'enracinement ou du collet de l'espèce végétale en développement.

29. Procédé selon la revendication 28, **caractérisé en ce que** l'agent de traitement agronomique est mélangé avec le matériel végétal de reproduction ou multiplication, sous forme solide et à l'état divisé, et le mélange ainsi obtenu sous forme solide et divisée, est disposé dans le substrat humide.

30. Procédé selon la revendication 28, **caractérisé en ce que**, avant sa disposition dans le substrat humide, l'agent de traitement agronomique est ou se trouve adjoint, de manière solidaire, au matériel végétal de reproduction ou multiplication, sous forme solide et à l'état divisé.

## Patentansprüche

1. Mittel zur agronomischen Behandlung einer lebenden Pflanze, getragen von einem feuchten Substrat, z.B. einem Boden, wobei dieses Mittel einen festen und geteilten Zustand aufweist und feste Partikel mit mindestens einer aktiven Einheit zur agronomischen Behandlung umfasst, **dadurch gekennzeichnet, dass** es Folgendes aufweist:
- einen Kern, der aus einem Korn aus einem festen inerten Material gegenüber dem Substrat besteht, umfassend eine innere entwickelte Oberfläche über der sichtbaren Oberfläche, und daher ausgelegt für eine Adsorption und/oder Absorption,
- die aktive Einheit zur agronomischen Behandlung, absorbiert im Korn und/oder adsorbiert auf der Oberfläche des Korns,
- eine erste Membran, die den Kern mit der aktiven Einheit umhüllt, bestehend aus mindestens einem hydrophilen Polymer, das nach außen gegenüber der aktiven Einheit durchlässig ist, wenn sie in direktem oder indirektem Kontakt mit dem feuchten Substrat ist,
- eine zweite Membran, wobei die zweite Membran aus mindestens einem hydrophoben Polymer besteht, das im Kontakt mit dem Substrat und der zweiten Membran, die die erste Membran bedeckt, aufgelöst werden kann.

2. Mittel nach Anspruch 1, **dadurch gekennzeichnet, dass** der mittlere Durchmesser der festen Partikel zwischen 5 und 500 µm liegt, insbesondere zwischen 5 und 50 µm und z.B. ungefähr 13 µm ist.

3. Mittel nach Anspruch 1, **dadurch gekennzeichnet, dass** das hydrophile, insbesondere filmbildende und/oder emulgierende Polymer ausgewählt ist aus der Gruppe, bestehend aus Polyvinylpyrollidon (PVP), Polyvinylalkoholen (PVA), Alginaten, Chitosan, modifizierten oder nicht modifizierten Polyosiden, davon Polysacchariden, modifizierten oder nicht modifizierten Stärken, Zellulosen, Dextrinen, Maltodextrinen, arabischen Gummi, Guargummi, Akaziengummi, Gelatinen und Proteinen (Soja, Molke).

4. Mittel nach Anspruch 1, **dadurch gekennzeichnet, dass** das feste inerte Material ein mineralisches Material ist, ausgewählt aus der Gruppe, betehend aus Zeoliten, Montmorilloniten, Calciumcarbonat, Kieselsäuren, Diatomeenerden, davon Tripel oder Kieselguhr und Bimssteinen.

5. Mittel nach Anspruch 4, **dadurch gekennzeichnet, dass** das mineralische Material eine modifizierte Diatomeenerde ist, erhalten durch hydrothermische Reaktion zwischen einer kieselsäurehaltigen Diatomeenerde des Kalkhydrats und des Wassers.

6. Mittel nach Anspruch 1, **dadurch gekennzeichnet, dass** das feste inerte Material ein nicht mineralisches Material ist, ausgewählt aus der Gruppe, bestehend aus makroporösen Polystyrenen, Polyacrylaten, mikroporösen Matrizen von Styren, wärmeschrumpfbaren Polymeren, z.B. Polyacrylamiden.

7. Mittel nach Anspruch 1, **dadurch gekennzeichnet, dass** das Korn die Form eines Mikrokügelchens aufweist.

8. Mittel nach Anspruch 1, **dadurch gekennzeichnet, dass** das Korn eine makroporöse Struktur aufweist.

9. Mittel nach Anspruch 1, **dadurch gekennzeichnet, dass** die spezifische Luft (BET) mit Bezug auf die Luft des festen inerten Materials mindestens gleich 50 ist, vorzugsweise zwischen 50 und 200 liegt und z.B. gleich 140 m²/g ist.

10. Mittel nach Anspruch 1, **dadurch gekennzeichnet, dass** das Massenverhältnis der aktiven Einheit zur agronomischen Behandlung mit Bezug auf die Körner aus festem inertem Material mindestens gleich 10⁻⁹ ist, vorzugsweise zwischen 10⁻⁶ und 1 liegt und z.B. gleich ungefähr 0,40 ist.

11. Mittel nach Anspruch 1, **dadurch gekennzeichnet, dass** das hydrophile Polymer ab einer Temperatur von mindestens gleich 30 °C und z.B. ab einer Temperatur von 45 °C oder 70 °C unlöslich in Wasser ist.

12. Mittel nach Anspruch 1, **dadurch gekennzeichnet, dass** die aktive Einheit zur agronomischen Behandlung ein Produkt ist, das die Keimung der Samen stimuliert.

13. Mittel nach Anspruch 1, **dadurch gekennzeichnet, dass** die aktive Einheit zur agronomischen Behandlung ein Produkt ist, das das Wachstum der Pflanzen fördert, z.B. durch die Erhöhung der Widerstandskraft gegen Umweltstress oder durch die Stabilisierung des pH oder einen Nährstoff.

14. Mittel nach Anspruch 1, **dadurch gekennzeichnet, dass** die aktive Einheit zur agronomischen Behandlung ein Produkt zum Schutz gegen die wachstumshemmenden Mittel der jungen Pflanzen ist, darin eingeschlossen Viren und pathogene Mikroorganismen, z.B. ein essenzielles Öl.

15. Mittel nach Anspruch 1, **dadurch gekennzeichnet, dass** die aktive Einheit zur agronomischen Behandlung ein Mikroorganismus ist, z.B. mindestens ein Pilz oder eine Bakterie, der/die das Wachstum einer Pflanze fördert, oder der diese Letztere gegen die Pathogene schützt.

16. Mittel nach Anspruch 1, **dadurch gekennzeichnet, dass** das hydrophobe Polymer ausgewählt ist aus der Gruppe, bestehend aus Synthesepolymeren, davon Poly(3-hydroxyoctonoat (THO), Polyhydroxyalcanoat (THA), Polymilchsäuren mit verschiedenen Molekulargewichten (PLA), Poly(3-hydroxybutyrat-co-3 hydrovalerat) (PHVA), Poly-e-coprolacton (PCL), Butylstyrenacrylat, Polyethylenterephtalat (PET), Glycol-Milchsäure-Copolymeren und Alkydharzen.

17. Mittel nach Anspruch 1, **dadurch gekennzeichnet, dass** das hydrophobe Polymer eine Polymilchsäure mit einer Molmasse zwischen 5000 und 100000 oder ein Alkydharz ist.

18. Verfahren zum Erhalt eines Mittels zur agronomischen Behandlung nach einem der Ansprüche 1 bis 17, wobei:
a) über ein inertes Material im festen und geteilten Zustand verfügt wird,
b) über die aktive Einheit zur agronomischen Behandlung in der flüssigen Phase verfügt wird,
c) über ein hydrophiles Polymer in der wässrigen Phase verfügt wird,
d) über ein hydrophobes, in der wässrigen Phase auflösbares, Polymer verfügt wird, **dadurch gekennzeichnet, dass**:
e) das feste, inerte und im geteilten Zustand vorliegende Material, umfassend eine innere entwickelte Oberfläche über seiner sichtbaren Oberfläche, mit der aktiven Einheit im flüssigen Zustand imprägniert wird, um ein festes und im geteilten Zustand vorliegendes Zwischenmaterial zu erhalten, das die aktive Einheit umfasst,
f) das feste und im geteilten Zustand vorliegende Zwischenmaterial mit dem hydrophilen Polymer in der wässrigen Phase beschichtet wird, um Globule zu erhalten,
g) das Wasser der Globule beseitigt wird, um ein Pulver zu erhalten
h) das Pulver mit dem hydrophoben Polymer in wässriger Phase beschichtet wird, um Globule zu erhalten.
i) das Wasser der Globule beseitigt wird, um das Behandlungsmittel zu erhalten.

19. Verfahren nach Anspruch 18, **dadurch gekennzeichnet, dass** bei Schritt g) das Wasser gemäß den Techniken beseitigt wird, die als trockene Emulsion bezeichnet werden, insbesondere in der Wirbelschicht oder bei der Zerstäubungs-Trockung.

20. Verfahren nach Anspruch 18, **dadurch gekennzeichnet, dass** die Imprägnierungsbedingungen vorbestimmt sind, um das inerte Material mit einer Gewichtsmenge der aktiven Einheit in flüssiger Phase zu laden, die zwischen 20 und 200 % liegt, vorzugsweise zwischen 30 und 50 % und z.B. gleich ungefähr 43 % der anfänglichen Masse der aktiven Einheit in flüssiger Phase ist.

21. Verfahren nach Anspruch 18, **dadurch gekennzeichnet, dass** die Schritte (e) und (f) gleichzeitig durchgeführt werden, indem das Zwischenmaterial verflüssigt wird und auf diesem Letzteren das hydrophile Polymer in wässriger Phase zerstäubt wird, all dies in einem Luftstrom.

22. Verfahren nach Anspruch 18, **dadurch gekennzeichnet, dass** das Polymer der wässrigen Phase mindestens 1 Gew.% und vorzugsweise 5 bis 10 Gew.% der wässrigen Phase darstellt.

23. Verfahren nach Anspruch 22, **dadurch gekennzeichnet, dass** das hydrophobe Polymer in wässriger Phase ein Latex oder eine Mikrosuspension oder eine Nanosuspension in Wasser ist.

24. Verfahren nach Anspruch 22, **dadurch gekennzeichnet, dass** die Schritte (e) und (h) gleichzeitig durchgeführt werden, indem das Pulver verflüssigt wird und auf diesem Letzteren das hydrophobe Polymer in wässriger Phase zerstäubt wird, all dies in einem Luftstrom.

25. Verfahren nach einem der Ansprüche 18 bis 24, **dadurch gekennzeichnet, dass** es einen Schritt des Spheronisierens des Behandlungsmittels nach einem Schritt des Entfernens des Wassers umfasst.

26. Pflanzliches Material zur Reproduktion oder Vervielfältigung einer Pflanzenart, insbesondere einer Pflanzenvarietät, im geteilten Zustand, z.B. Samen, umfassend diskrete Elemente, **dadurch gekennzeichnet, dass** jedes diskrete Element mit einer Matrix aus auflösbarem Material umhüllt oder laminiert ist, das ein Mittel zur Behandlung nach einem der Ansprüche 1 bis 17 umfasst.

27. Material nach Anspruch 26, **dadurch gekennzeichnet, dass** es aus einem Saatgut einer Art besteht, insbesondere einer Varietät, vom Typ Gemüse oder Blumen oder Kulturpflanze, oder aus einem Saatgut eines Baums oder eines Strauchs.

28. Verfahren zur agronomischen Behandlung, wobei in einem feuchten Substrat, z.B. einem Boden, einem pflanzlichen Material zur Reproduktion oder Vervielfältigung einer Pflanzenart, z.B. Saatgut angebracht wird, insbesondere einer Pflanzenvarietät, **dadurch gekennzeichnet, dass** in dem gleichen Subastrat ein Mittel zur agronomischen Behandlung nach einem der Ansprüche 1 bis 17 angebracht wird, sodass die aktive Einheit zur agronomischen Behandlung im Bereich der Wurzel oder des Wurzelanlaufs der Pflanzenart in der Entwicklung freigesetzt wird.

29. Verfahren nach Anspruch 28, **dadurch gekennzeichnet, dass** das Mittel zur agronomischen Behandlung mit dem pflanzlichen Material zur Reproduktion oder Vervielfältigung in fester Form und im geteilten Zustand gemischt wird und die so erhaltene Mischung in fester und geteilter Form im feuchten Substrat angebracht wird.

30. Verfahren nach Anspruch 28, **dadurch gekennzeichnet, dass** vor seiner Anbringung im feuchten Substrat das Mittel zur agronomischen Behandlung auf fest verbundene Weise dem pflanzlichen Material zur Reproduktion oder Vervielfältigung in fester Form und im geteilten Zustand benachbart ist oder sich befindet.

## Claims

1. An agent for the agronomic treatment of a living plant supported by a wet substrate, such as a soil, said agent being in the solid state and divided, and comprising solid particles including at least one active entity for the agronomic treatment, **characterized by** that each particle comprises:
- a core consisting of a grain of an inert solid material vis-à-vis the substrate, including an inner developed surface greater than its apparent surface, and therefore suitable for an adsorption and/or an absorption,
- the active entity for agronomic treatment, absorbed into the grain and/or adsorbed to the surface of said grain,
- a first membrane encapsulating the core comprising the active entity, consisting of at least one hydrophilic polymer, permeable outwards vis-à-vis the active entity, when it is in direct or indirect contact with the moist substrate ,
- a second membrane, said second membrane consisting of at least one hydrophobic polymer which can be disintegrated in contact with the substrate and said second membrane coating the first membrane.

2. The agent according to claim 1, **characterized in that** the mean diameter of the solid particles is comprised between 5 and 500 µm, preferably comprised between 5 and 50 µm, and for example of about 13 µm.

3. The agent according to claim 1, **characterized in that** the hydrophilic polymer, in particular film-forming and/or emulsifying polymer, is selected from the group consisting of polyvinylpyrrolidone (PVP), polyvinyl alcohols (PVA), alginates, chitosan, modified or unmodified polyosides, including polysaccharides, modified or unmodified starches, celluloses, dextrins, maltodextrins, gum arabic, guar gum, acacia gum, gelatins, and proteins (soy, whey).

4. The agent according to claim 1, **characterized in that** the inert solid material is a mineral material selected from the group consisting of zeolites, montmorillonites, calcium carbonate, silicas, diatomaceous earth, including Tripoli or kieselguhr, and pumice.

5. The agent according to claim 4, **characterized in that** the mineral material is a modified diatomaceous earth, obtained by hydrothermal reaction between diatomaceous silica, hydrated lime, and water.

6. The agent according to claim 1, **characterized in that** the inert solid material is a non-mineral material, selected from the group consisting of macro-porous polystyrenes, polyacrylates, micro-porous styrene matrices, heat-shrinkable polymers, for example polyacrylamides.

7. The agent according to claim 1, **characterized in that** the grain is in the form of a microsphere.

8. The agent according to claim 1, **characterized in that** the grain has a macro-porous structure.

9. The agent according to claim 1, **characterized in that** the specific surface area (BET) relative to the surface area of the inert solid material is at least equal to 50, preferably comprised between 50 and 200, and for example equal to 140 m²/g.

10. The agent according to claim 1, **characterized in that** the weight ratio of the active entity for agronomic treatment relative to the inert solid material grains is at least equal to 10⁻⁹ preferably comprised between 10⁻⁶ and 1 and for example equal to about 0.40.

11. The agent according to claim 1, **characterized in that** the hydrophilic polymer is insoluble in water from a temperature at least equal to 30 °C, for example from a temperature of 45 °C or 70 °C.

12. The agent according to claim 1, **characterized in that** the active entity for the agronomic treatment is a product stimulating seed germination.

13. The agent according to claim 1, **characterized in that** the active entity for the agronomic treatment is a product promoting plant growth, for example increasing the resistance to environmental stresses, or stabilizing pH, or a nutrient.

14. The agent according to claim 1, **characterized in that** the active entity for the agronomic treatment is a product of protection against agents unfavorable to the growth of young plants, including viruses and pathogenic microorganisms, for example an essential oil.

15. The agent according to claim 1, **characterized in that** the active entity for the agronomic treatment is a microorganism, for example at least one fungus or one bacterium, stimulating the growth of a plant, or protecting the latter against the pathogens.

16. The agent according to claim 1, **characterized in that** the hydrophobic polymer is selected from the group consisting of synthetic polymers, including poly(3-hydroxy octanoate) (THO), polyhydroxyalkanoate (THA), polylactic acids of different molecular weights (PLA), poly(3-hydroxybutyrate-co-3-hydrovalerate) (PHVA), poly-e-coprolactone (PCL), styrene butyl acrylate, polyethylene terephthalate (PET), glycolic-lactic copolymers and alkyd resins.

17. The agent according to claim 1, **characterized in that** the hydrophobic polymer is a polylactic having a molar mass between 5,000 and 100,000, or an alkyd resin.

18. A method for obtaining an agronomic treatment agent according to any one of claims 1 to 17, according to which:
a) the inert, solid-state and divided material, is provided,
b) the active entity for the agronomic treatment, in liquid phase, is provided
c) a hydrophilic polymer, in aqueous phase, is provided
d) a hydrophobic polymer, which can be disintegrated in aqueous phase, is provided, **characterized in that**:
e) the inert, solid and divided-state material, is impregnated, including an inner developed surface greater than its apparent surface with the active entity in liquid phase, in order to obtain an intermediate, solid and divided-state material, including the active entity,
f) the intermediate, solid and divided-state material is coated with the hydrophilic polymer in aqueous phase, in order to obtain cells,
g) the cells water is removed to obtain a powder,
h) the powder is coated with the hydrophobic polymer in aqueous phase, in order to obtain cells,
i) the cells water is removed to obtain the treatment agent.

19. The method according to claim 18, **characterized in that**, during step g), water is removed according to techniques called dry emulsion techniques, in particular the fluidized air bed technique or the spray-drying technique.

20. The method according to claim 18, **characterized in that** the impregnation conditions are predetermined for charging the inert material with a mass quantity of the active entity in liquid phase, comprised between 20 and 200%, preferably between 30 and 50%, and for example equal to about 43% of the initial mass of the active entity in liquid phase.

21. The method according to claim 18, **characterized in that** steps (e) and (f) are performed simultaneously, by fluidizing the intermediate material, and spraying thereon the hydrophilic polymer in aqueous phase, all in an air stream.

22. The method according to claim 18, **characterized in that** the polymer of the aqueous phase represents at least 1%, and preferably 5 to 10% by weight of said aqueous phase.

23. The method according to claim 22, **characterized in that** the hydrophobic polymer in aqueous phase is a latex or a micro- suspension or nano-suspension in water.

24. The method according to claim 22, **characterized in that** steps (g) and (h) are performed simultaneously, by fluidizing the powder, and spraying thereon the hydrophobic polymer in aqueous phase, all in an air stream.

25. The method according to any one of claims 18 to 24, **characterized in that** it comprises a step of spheronizing the treatment agent, after a step of removing the water.

26. A reproduction or multiplication plant material of a plant species, in particular plant variety, in the divided state, for example seeds, comprising discrete elements, **characterized in that** each discrete element is covered or film-coated with a matrix of a material which can be disintegrated incorporating a treatment agent according to any one of claims 1 to 17.

27. The material according to claim 26, **characterized in that** it consists of a seed of a species, in particular of a vegetable, flower or field crop variety, or consists of a tree or shrub seed.

28. A method for agronomic treatment, on which there is disposed in a wet substrate, for example a soil, a reproduction or multiplication plant material of a species, for example seeds, in particular a plant variety, **characterized in that** there is disposed, in the same substrate, an agronomic treatment agent according to any one of claims 1 to 17, so that the active entity for agronomic treatment is released into the rooting or collar zone of the developing plant species.

29. The method according to claim 28, **characterized in that** the agronomic treatment agent is mixed with the reproduction or multiplication plant material, in solid form and divided state, and the mixture thus obtained in solid form and divided sate is disposed in the moist substrate.

30. The method according to claim 28, **characterized in that**, before it is disposed in the wet substrate, the agronomic treatment agent is added, in a secured manner, to the reproduction or multiplication plant material, in solid form and divided state.
